# EUROPEAN PATENT SPECIFICATION

(11) **EP 1 413 503 B1**
(45) Date of publication and mention of the grant of the patent: **30.05.2007**
(21) Application number: 02257290.3
(22) Date of filing: 21.10.2002
(51) Int. Cl.: B62H 5/00, B60P 7/08

(54) **Safety anchor with swivel ring**
Sicherheitsverankerung mit schwenkbarer Öse
Ancrage de sécurité avec anneau pivotant

(43) Date of publication of application: 28.04.2004
(73) Proprietor: Hardie, Frank James, Flitwick, Bedfordshire MK45 1JT (GB)
(72) Inventor: Hardie, Frank James, Flitwick, Bedfordshire MK45 1JT (GB)

(56) References cited:
- GB-A- 1 316 021
- US-A- 4 592 686
- US-A- 5 052 869

## Description

### Field of the Invention

The present invention concerns improvements in and relating to security chain anchors, being anchors to which security chains for securing any otherwise moveable object that may be vulnerable to theft are fastened in use. The term security chain is intended to encompass braided wire rope/steel hawsers and, indeed, any other such means as are used to tie down or tether moveable objects against theft.

### Background to the Invention

Bicycles and motor bikes, particularly, are prime targets for theft for the fact that they are often of necessity parked in generally open, public or private places to which a thief has ready access. Furthermore, it is generally not sufficient to simply immobilise the bicycle or motor cycle with a chain through the wheels or other part of the cycle to prevent wheeling motion or steering since this may not obstruct the determined thief.

The cyclist or motor cyclist, for example, has the choice of a range of different forms of security chain for tying down/securely tethering their motor vehicle. In general, however, there is little in the way of provision of suitable means for anchoring the security chains in a convenient and space efficient manner. Public parking facilities may provide cycle stands that comprise looping steel structures that can not only serve as props for the cycle but also as a fixed anchor for the security chain. However, such installations are impractical and inappropriate in space restricted areas.

It is a general object of the present invention to provide a cost effective, compact and secure anchor for security chains.

Although one suitable area of use of such anchors is in the prevention of theft of cycles and motor cycles, the anchors may be used in association with any moveable property that is vulnerable to theft. Other examples of use include tethering of industrial plant or construction industry plant.

A fastening device that provides a self-contained tie-down unit by means of which load from a swivel eye is transferred to a base is known of from U.S. as,592,686.

### Summary of the Invention

According to the present invention there is provided a security chain anchor as installed which comprises: a base plate (1) that is bolted or otherwise securely fastened to a fixed surface such as, for example, a floor or wall; and a loop-bearing member (6) having a rigid loop (8) mounted thereto to receive a tether, wherein the loop (8) is pivotally mounted to the loop-bearing member (6) and the loop-bearing member (6) is rotatable relative to the base plate (1), wherein the base plate (1) is substantially circular-cylindrical and the loop-bearing member (6) is formed as an annular sleeve that encircles the base plate (1) and is held captive adjacent the fixed surface, in use, by the base plate (1) but is rotatable around the base plate (1).

Suitably the loop bearing member is fully rotatable, i.e.. rotatable through 360° relative to the base plate.

Preferably the loop is adapted to nest against the exterior of the loop-bearing member so that the, as installed, upper face presented by the anchor may be substantially flat when the loop is not in use.

Preferably the loop is formed as part of an annulus of a larger diameter than the loop-bearing member. The loop bearing member may be substantially circular cylindrical, and the loop may be part of a circular cylinder of larger diameter.

The loop bearing member may be a segment of a notional sphere and the loop may be part of a segment of a larger notional sphere that is substantially concentric with the notional sphere of the loop bearing member. Irrespective of whether the exterior of the loop bearing member is spherically curved, importantly, the radially inner face of the loop and the radially outer face of the loop bearing member that nest together each have a mating spherical curve, whereby the loop may, for example, be pivoted through 180 degrees to move from lying against one side of the loop bearing member to lying against its other side while maintaining a substantially constant tight tolerance of fit of the loop to the loop bearing member and better resisting attack by tools.

In one particularly preferred construction, one or both of the loop-bearing member and the loop are formed from existing pipe sections. This enables considerable cost savings in the construction of the anchor. The components may be readily adapted to the required configuration by simple machining actions.

Preferably the base plate has a central bolt receiving aperture. The base plate, loop-bearing member and loop are preferably all concentrically positioned relative to the central bolt. This configuration provides an extremely simple and compact arrangement while allowing for full freedom of movement of the loop relative to the bolt.

Particularly preferably the base plate has a bolt receiving aperture to fasten to the fixed surface and the bolt receiving aperture is counterbored and the anchor further comprises a blanking cap that fits, in use, tightly suitably as an interference fit within the counterbore over the top of the bolt when the anchor has been installed to resist subsequent access to the bolt.

### Brief Description of the Drawings

Preferred embodiments of the present invention will now be more particularly described, by way of example, with reference to the accompanying drawings, wherein:

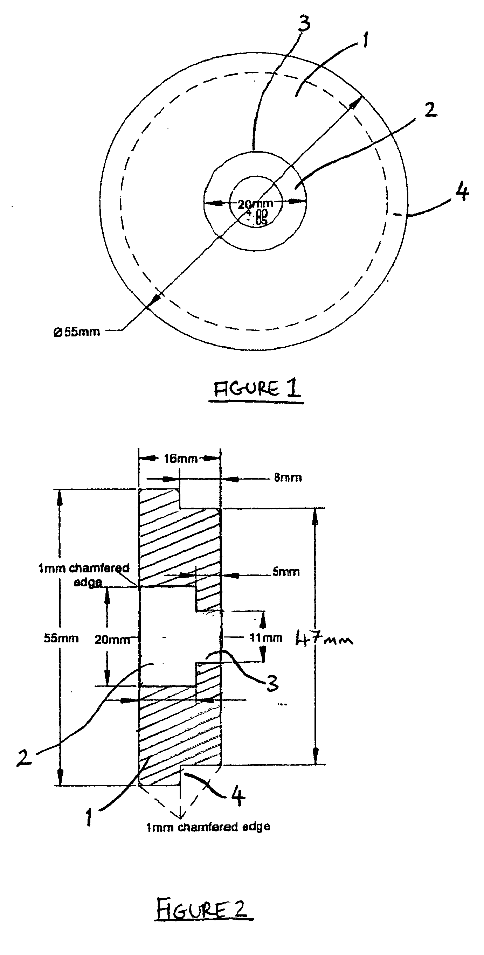

Figure 1 and Figure 2 are, respectively, a top plan view and a sectional view of a base plate of the first preferred embodiment of anchor;
Figure 3 and Figure 4 are, respectively, a top plan view and sectional view of a loop-bearing member and loop of the first preferred embodiment of anchor - figure 4 is a section taken along the line IV-IV in Figure 3;
Figure 5 is a sectional view illustrating the base plate mounted in place within the loop-bearing member;
Figures 6, 6a and 7 are, respectively, a top plan view and end elevation view and a side elevation view of a loop of a second preferred embodiment of the invention;
Figures 8 and 9 are, respectively a top plan view and side elevation view of a loop bearing member of the second embodiment of the invention;
Figure 10 is a side elevation view of a base plate of the second preferred embodiment;
Figures 11 and 12 are, respectively, an underside plan view and side elevation view of a blanking cap for use with the base plate of the second preferred embodiment; and
Figure 13 is a side elevation view of a pivot pin for use in the second preferred embodiment.

### Description of the preferred embodiment

The illustrated anchor comprises a substantially concentric configuration of annular components.

At the heart of the anchor, and not illustrated, is a long bolt of the type that is suitable for securely lodging into a concrete floor or other fixed surface and resisting powerful tensile/withdrawal forces- suitably having an associated expanding body.

The head of the bolt seats within a central circular recess 2 of a circular cylindrical base plate 1 and with the shank of the bolt passing down through an aperture 3 at the centre of the base plate 2.

The recess 2 is suitably circular and concentric to the central aperture 3. The radius of each of the central aperture 2 and the recess 3 are selected to suit the radius of the head and shank, respectively, of the bolt to be used.

The circular cylindrical form of the base plate 1 incorporates a step 4 in its outer cylindrical face.

The base plate 1 may suitably be formed as a single block of metal or metal alloy that is machined to provide the concentric circular aperture 3 and recess 2 in addition to the step 4 of the outer cylindrical wall.

The purpose of the step 4 is to provide a shoulder that will seat against a corresponding annular ledge 5 within a circular cylindrical loop-bearing member 6 as can best be seen in Figure 5.

The circular cylindrical loop-bearing member 6 is suitably formed of a short section of steel pipework. In the illustrated example, which is substantially to the scale of one working embodiment, the length of steel piping used is 15 mm in length and with a 105 mm circumference.

In addition to being machined to provide the ledge 5 in the inner bore of the loop-bearing member 6, a pair of pivot holes 7 are drilled in radially opposing positions through the wall of the member 6. A loop 8 to which the securing tether is to be mounted is itself secured to the loop-bearing member 6 by a pivot pin 9 at each end and extending through the respective holes 7.

The pivot pins 9 are shown as welded directly to the very ends of the tethering loop but may, of course, be passed through holes near the ends of the tethering loops. The loop 8 is easily and economically formed as an arcuate portion of a short section of steel pipe similar to the steel pipe used to make the loop-bearing member 6 but in this case with a larger diameter sufficient to part encircle the loop-bearing member 6.

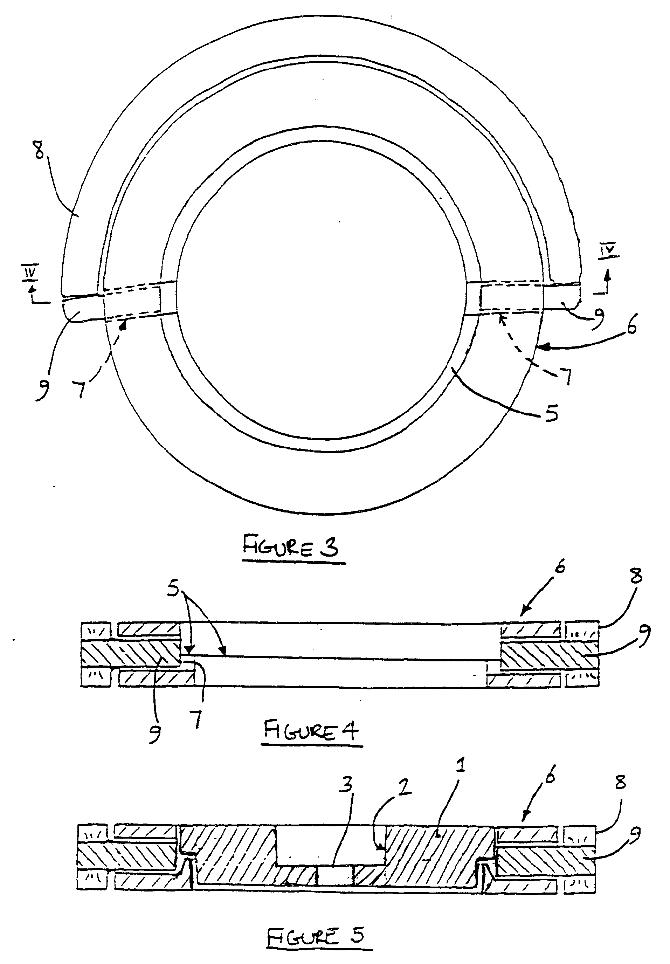

As can be readily seen from Figure 3, the loop 8 nests cleanly against the cylindrical external surface of the loop-bearing member 6 to present a substantially completely flat upper surface to the anchor when the anchor is bolted to, for example, the ground.

The ability of the loop 8 to stow neatly in this fashion renders it highly compact when not in use such that even if it is installed in the centre of a driveway it will be relatively unobtrusive.

With the configuration of the invention it is totally feasible to permanently install an anchor of the invention in a driveway where it may be repeatedly driven over by the wheels of a car, without problem.

When required for use, the loop 8 simply pivots outwardly from the plane of the bearing member 6 to enable the security chain to be passed through it. For optimal flexibility in use of the anchor, not only does the inclination of the loop 8 vary but also the radial orientation of the loop 8 around the central fixing bolt.

The base plate 1 that is bolted to the fixed surface holds the loop-bearing member 6 captive adjacent the fixed surface but does not prevent the bearing member 6 from rotating around the base plate 1. When installing the anchor, allowance should be made for a small clearance between the ledge 5 of the bearing member 6 and the shoulder 4 of the base plate 1 or they should only lightly inter-engage so that any friction between them is minimised.

By configuring the anchor with the loop 8 outermost any risk of the anchor and tether snaring is minimised and versatility of use is optimised.

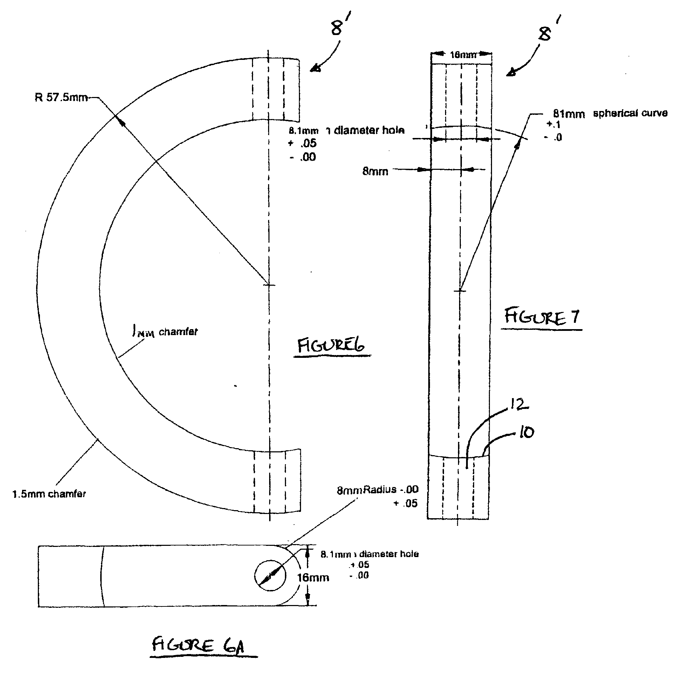

Referring now to the second preferred embodiment of the invention illustrated in Figures 6 to 12, in this embodiment the loop 8' and the loop bearing member 6' are respectively formed with their mating surfaces - i.e. the radially outer face 11 of the loop bearing member 6' and the radially inner face 10 of the loop 8' - having a concentric spherical curvature. This spherical curvature allows maintenance of tight tolerance of mating fit of the loop 8' to the loop bearing member 6' even as the loop 8' pivots about its pivotal attachment to the loop bearing member 6'. This arrangement substantially increases the security of the device in resisting attack from hacksaws or chisels, protecting the pivot pins 9' from damage.

In this second embodiment modification has also been made to the pivot pins 9' and the nature of their mounting. In Figures 6 and 7 it will be seen that the pivot pins 9' are not welded to the end faces of the loop 8' but are, instead, accommodated within respective sockets 12 near to the ends of the loop 8'. This again, adds to the overall protection of the pivot pins 9' from attack.

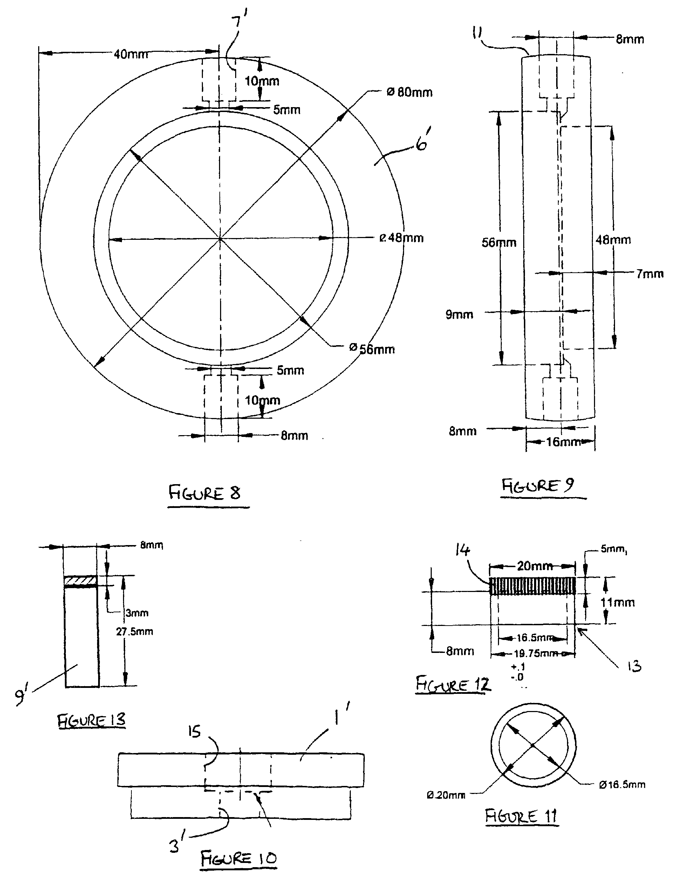

From Figure 13 it will be seen the pivot pins 9' are chamfered at each end and closely cooperatively engaged with the pivot holes 7' of the loop bearing member 6'. The preferred material for the pivot pins 9' is silver steel and they suitably have dimensions of the order of, for example, 33 millimetres in length with 10 mm diameter and 3mm induction hardening at one end. An annular groove near to one end of the pivot pin 9' allows for interference fit of the pivot pin 9' in the socket 12.

Referring to Figures 11 and 12, the second preferred embodiment further differs from the first in having a blanking cap 13 for substantially preventing access to the bolt by which the base plate 1' is fastened to the fixed surface in use. The blanking cap 13 is circular cylindrical with an enlarged diameter top portion that is machined to be serrated on its outer circumferential face 14. This blanking cap 13 is designed to be an interference fit in a counterbore 15 of the socket 3' for the bolt.

Where, for example, the bolt is a 12 mm socket head bolt and fixed by raw fixing into concrete, the blanking cap 13 is inserted into the counterbore 15 after the bolt has been tightened and the cylindrical side wall of the blanking cap 13 passes concentrically over the head of the bolt. The machine serrated top 14 of the blanking cap 13 is an interference fit with the counterbore 15 and is hammered and keyed into place. This stops the blanking cap 13 from subsequently being removed. Furthermore, by hardening the blanking cap 13 it is able to resist drill attack and provides a very effective means of preventing access to the bolt. Example dimensions and materials suitable for construction of a ground anchor in accordance with the second preferred embodiment of the invention will be briefly listed below. Alternative example dimensions are also given in the drawings for a smaller anchor. Differing dimensions may be used depending in part upon the end application of the anchor. For bicycles and small bicycles the anchor may be relatively small in comparison to one for mopeds or one for large motorbikes.

### Large embodiment

Loop 8' - material mild steel (50 Rockwell) hollow bar, heat treatment case hardened to 0.5 mm deep, zinc plated finish dimensions 149 mm outside diameter, 108.5 mm inside diameter machined with a spherical curve. Overall thickness 20 mm, two in line holes 10.1 mm diameter to receive the pins 9'.

Loop-bearing member 6' - material mild steel hollow bar, case hardened to 0.5 mm deep, zinc plated finish (no plating in holes) dimensions - 108 mm outside diameter machined with spherical curve. Stepped internal diameter 76 mm at 11 mm diameter deep and 67mm, leaving shoulder of 4.5 mm overall thickness 20 mm. Two in line holes 10 mm diameter, drilled into the 108 mm diameter spherical curve (central to the 20mm thickness).

Base Plate 1' - material mild steel billet, heat treatment case hardened to 0.5mm deep, zinc plated finish, dimensions: 75mm outside diameter, 10 mm thick. Turned to 65mm diameter, increasing to 20mm thick. Reform hardening, centrally drilled at 30mm diameter and counterbored from the 75mm diameter side to 14mm deep.

Blanking cap 13 - material mild steel, case hardened to 0.5mm deep, zinc plate finish; dimensions: 25mm diameter at 5mm (grooved), reducing to 24.75mm diameter for 9mm (total depth 14mm). Bored out from the 24.75mm diameter at 20mm x 12mm deep with machined flat top on knurled/serrated end.

The pins 9' are suitable silver steel induction hardened at one end, lightly zinc plated and with a small 0.25mm deep groove proximate that end. Both ends suitably have chamfered edges.

Although the present invention has been described herein above with respect to two preferred embodiments, a range of other embodiments are conceivable within the scope of the invention and fall within the scope of the invention as claimed.

## Claims

1. A security chain anchor which comprises: a base plate (1) that is bolted or otherwise securely fastened to a fixed surface such as, for example, a floor or wall; and a loop-bearing member (6) having a rigid loop (8) mounted thereto to receive a tether, wherein the loop (8) is pivotally mounted to the loop-bearing member (6) and the loop-bearing member (6) is rotatable relative to the base plate (1), wherein the base plate (1) is substantially circular-cylindrical and the loop-bearing member (6) is formed as an annular sleeve that encircles the base plate (1) and is held captive adjacent the fixed surface, in use, by the base plate (1) but is rotatable around the base plate (1).

2. A security chain anchor as claimed in Claim 1, wherein the loop (8) is adapted to nest against the exterior of the loop-bearing member (6) so that the upper face presented by the anchor is substantially flat when the loop (8) is not in use.

3. A security chain anchor as claimed in Claim 1 or 2, wherein the loop (8) is formed as part of an annulus of a larger diameter than the loop-bearing member (6).

4. A security chain anchor as claimed in Claim 3, wherein the loop bearing member (6) is substantially circular cylindrical, and the loop (8) is part of a circular cylinder of larger diameter.

5. A security chain anchor as claimed in Claim 4, wherein the loop bearing member (6) is part of a segment of a notional sphere and the loop (8) is part of a segment of a larger notional sphere that is substantially concentric with the notional sphere of the loop bearing member (6).

6. A security chain anchor as claimed in any preceding claims, wherein the radially inner face of the loop (8) and the radially outer face of the loop bearing member (6) that nest together each have a mating spherical curve.

7. A security chain anchor as claimed in any of Claims 1 to 5, wherein one or both of the loop-bearing member (6) and the loop (8) are formed from existing pipe sections.

8. A security chain anchor as claimed in any preceding claim, wherein the base plate (1) has a central bolt receiving aperture (3), and the base plate (1), loop-bearing member (6) and loop (8) are all concentrically positioned relative to the central bolt.

9. A security chain anchor as claimed in Claim 1, wherein the base plate has a bolt receiving aperture (3) to fasten to the fixed surface and the bolt receiving aperture (3) is counterbored (15),

10. A security chain anchor as claimed in Claim 9, wherein the anchor further comprises a blanking cap (13) that fits, in use, tightly within the counterbore (15) over the top of the bolt when the anchor has been installed to resist subsequent access to the bolt.

## Patentansprüche

1. Eine Sicherheits-Ankerkette, welche folgendes umfasst: eine Basisplatte (1), die auf eine feste Oberfläche, wie z.B. ein Boden oder eine Wand, verschraubt oder anderweitig sicher festgemacht wird; und ein spule-tragendes Bauteil, das einen starren Ring hat (8) und drauf befestigt ist, um ein Seil aufzunehmen, worin der Ring (8) zentral an dem spule-tragenden Bauteil (6) befestigt wird und das spule-tragende Bauteil relativ zur Grundplatte (1) drehbar ist, worin die Grundplatte (1) grundlegend zirkular-zylindrisch und das spule-tragende Bauteil (6) geformt ist wie eine ringförmige Muffe, die die Grundplatte (1) umkreist und neben der fixierten Oberfläche fest gehalten wird, unter Verwendung der Grundplatte (1), aber dabei drehbar um die Grundplatte (1) ist.

2. Eine Sicherheits-Artkerkette wie in der Anforderung 1 beschrieben, worin die Spule (8) angepasst wird, um an die Außenseite des spule-tragenden Bauteils (6) zu passen, so dass die Oberseite des Ankers grundlegend abgeflacht ist, wenn die Spule (8) nicht in Gebrauch ist.

3. Eine Sicherheitsankerkette wie in Anforderung 1 oder 2 beschrieben, worin die Spule (8) als ein Teil eines Hohlrads von größerem Umfang, wie das spulentragende Bauteil (8) geformt ist.

4. Eine Sicherheitsankerkette, wie sie in Anforderung 3 angefordert wird, worin das spule-tragende Bauteil (8) Teil eines ringförmigen Zylinders mit einem größeren Durchmesser ist.

5. Eine Sicherheitsankerkette wie sie in Anforderung 4 beschrieben wird, worin das spule-tragende Bauteil (6) Teil eines Segments einer angenommenen Kugel ist, die grundlegend konzentrisch mit der angenommenen Kugel des spule-tragenden Bauteils (6) ist.

6. Eine Sicherheitsankerkette wie in jeder vorhergehenden Anforderung beschrieben, worin die radiale Innenseite der Spule (8) und die radiale Außenseite des spule-tragenden Bauteils (6), die ineinander stecken, beide eine gepaarte kugelförmige Krümmung haben.

7. Eine Sicherheitsankerkette wie in den Anforderungen 1 bis 5 beschrieben, worin eines oder beide spule-tragende Bauteile (6) und die Spule selbst (8) aus bestehenden Rohrabschnitten geformt sind.

8. Eine Sicherheitsankerkette wie in jeder vorangegangenen Anforderung beschrieben, worin die Grundplatte (1) eine zentrale Öffnung für die Schrauben (3) besitzt, und die Grundplatte (1), das spule-tragende Bauteil (6) und Spule (8) bezüglich der zentralen Schraube konzentrisch angeordnet sind.

9. Eine Sicherheitsankerkette wie in Anforderung 1 beschrieben, worin die Grundplatte eine Öffnung für die Schraube (3) besitzt, um an der festen Oberfläche befestigt zu werden und die Öffnung für die Schraube versenkt ist (15).

10. Eine Sicherheitsankerkette wie in Anforderung 9 beschrieben, worin der Anker zusätzlich einen in Form geschnittenen Aufsatz (Haube)(13) hat, der während des Betriebs genau in die Schraubensenkung (15) passt, über, bzw, auf die Schraube, nachdem der Anker installiert wurde, um nachfolgendem Zugriff auf die Schraube vorzubeugen.

## Revendications

1. Un ancrage de chaîne de sécurité composé de : une embase (1) enchâssée ou solidement arrimée par d'autre moyens à une surface telle que, par exemple, un sol ou un mur ; et une barre de support de boucle (6) sur laquelle est montée une boucle rigide (8) pour recevoir une sangle, où la boucle (8) est fixée sur pivot à la barre de support de boucle (6) et la barre de support de boucle (6) est rotatoire par rapport à l'embase (1), où l'embase est absolument circulaire/cylindrique et où la barre de support de boucle (6) se présente comme un manchon en forme d'anneau encerclant l'embase (1) et est maintenue accolée à la surface fixée, en fonctionnement, par l'embase (1) mais est rotatoire autour de l'embase (1).

2. Un ancrage de chaîne de sécurité tel qu'exposé dans la Réclamation 1, où la boucle (8) est adaptée au cache sur la partie extérieure de la barre de support de boucle (6) de telle façon que la face supérieure présentée par l'ancrage est absolument plate lorsque la boucle (8) n'est pas en fonctionnement.

3. Un ancrage de chaîne de sécurité tel qu'exposé dans les Réclamations 1 ou 2, où la boucle (8) est partie constitutive d'un anneau d'un diamètre supérieur à celui de la barre de support de boucle (6).

4. Un ancrage de chaîne de sécurité tel qu'exposé dans la Réclamation 3, où la barre de support de boucle (6) est absolument circulaire/cylindrique, et où la boucle (8) fait partie d'un cylindre circulaire d'un diamètre supérieur.

5. Un ancrage de chaîne de sécurité tel qu'exposé dans la Réclamation 4, où la barre de support de boucle (6) fait partie d'un segment d'une sphère virtuelle et la boucle (8) fait partie d'un segment d'une sphère virtuelle plus grande dont l'axe est substantiellement occupé par la sphère virtuelle de la barre de support de boucle (6).

6. Un ancrage de chaîne de sécurité tel qu'exposé dans toute Réclamation précédente, où la face axiale interne de la boucle (8) et la face axiale externe de la barre de support de boucle (6) qui s'imbriquent présentent chacune une courbe sphérique coordonnée.

7. Un ancrage de chaîne de sécurité tel qu'exposé dans toute Réclamation de 1 à 5, où soit la barre de support de boucle (6), ou la boucle (8), ou les deux, sont formées à partir d'éléments de longueur droite existants.

8. Un ancrage de chaîne de sécurité tel qu'exposé dans toute Réclamation précédente, où l'embase (1) présente une ouverture centrale d'admission de boulon (3), et où l'embase (1), la barre de support de boucle (6) et la boucle (8) sont toutes positionnées de façon concentrique par rapport au boulon central.

9. Un ancrage de chaîne de sécurité tel qu'exposé dans la Réclamation 1, où l'embase présente une ouverture d'admission de boulon (3) permettant l'arrimage à la surface fixée et où l'ouverture d'admission de boulon (3) est alésée (15).

10. Un ancrage de chaîne de sécurité tel qu'exposé dans la Réclamation 9, où l'ancrage comprend en sus un bouchon obturateur (13) qui, en fonctionnement, s'ajuste étroitement à l'alésage (15) par-dessus le boulon lorsque l'ancrage a été installé pour condamner l'accès ultérieur au boulon.
